# EUROPEAN PATENT SPECIFICATION

(11) **EP 2 777 896 B1**
(45) Date of publication and mention of the grant of the patent: **15.04.2020**
(21) Application number: 13199771.0
(22) Date of filing: 30.12.2013
(51) Int. Cl.: B26D 1/00, B26D 7/18, B26D 3/16, B26D 7/06, B65G 47/66, B65G 21/14

(54) **Improved device for eliminating trims of rolls or logs of weblike material**
Verbesserte Vorrichtung zur Beseitigung von Abfall von Rollen aus bahnartigem Material
Dispositif amélioré pour l'élimination de détoure de rouleaux ou rondins de matériau en bande

(30) Priority: 04.01.2013 IT MI20130002 U
(43) Date of publication of application: 17.09.2014
(73) Proprietor: Gambini International S.A., 2449 Luxembourg (LU)
(72) Inventor: Gambini, Giovanni, 56100 PISA (IT)
(74) Representative: Branca, Emanuela

(56) References cited:
- EP-A1- 0 607 761
- EP-A1- 1 386 701
- WO-A1-2012/156477
- US-A1- 2002 000 400

## Description

The present invention refers to an improved device for eliminating trims of rolls or logs of weblike material, in particular associable with a sawing machine.

In the field of the production of rolls or similar of kitchen and/or toilet paper, rolls of paper are made wound on tubes or cores having a predetermined diameter and height. Thereafter, the single rolls must be cut to size, with a final size, also predetermined, such that they are ready for distribution and for final use by the customer.

It is currently known to carry out the cutting of such final rolls to a predetermined size through special sawing machines that receive, for example, a series of logs, arranged parallel to one another, and cut them into a plurality of short rolls of the required dimensions, which are thus arranged in succession one after the other.

Such an operation is carried out on sawing machines, in general through rotary blades, and its final result is the formation of a plurality of rolls or pieces of the required size, formed from an elongated log or roll that moves forward step by step.

During this operation, both in the head end of the single log or roll and in the back end, end pieces are made that cannot be used and are in the form of mini-rolls of limited length, i.e. not meeting the required size standard. Since the finished rolls are fed one after another towards the subsequent packaging, in general, such mini-rolls or trims deriving from the cutting of the logs must be eliminated during the evacuation of the rolls cut to size, so as not to create a hindrance to packaging.

Indeed, it is clear that the presence of the mini-rolls or end trims could even lead to the packaging machine becoming blocked, without even mentioning the possible packs made with the wrong number of rolls cut to size, due to the presence of the waste mini-rolls or trims.

Precisely in order to attempt to eliminate these obvious problems, complex devices have been made and are used that allow the mini-rolls or trims to be eliminated during the evacuation of the rolls cut to size.

A first device provides that all of the rolls cut to size be sucked up as soon as they advance one after the other, after cutting. On the other hand, the mini-rolls or trims coming directly from the sawing machine are not picked up by the suction, and instead are sent towards a discharge opening down which they fall.

The close correlation of the elements of these devices determines a machine that is complex to build and synchronise. Moreover, an adjustment of all of the accessory parts necessary both for the suction of the rolls and for the transportation thereof must be provided.

A second device for eliminating the trims that is already known and used comprises an opening with which two retractable planes or walls are associated that open and/or close it according to predetermined and correlated sequences. All of this takes place according to whether the cut product passing through is a roll cut to size or a mini-roll or trim. Indeed, the retractable planes close the opening, once the head trim has passed, and open it again when the back trim arrives, in other words when the passage of rolls cut to the correct size has ended.

This second device, although it works well, can create problems connected to the movement in perfect synchrony between the two retractable planes and the conveyers for advancing the rolls and trims in succession. Indeed, there is the possibility of jamming and there are problems of precise and correct adjustment.

There is also a third known device, disclosed in document EP 1 386 701 A1, that provides both the suction of the rolls cut to size, and the closing of the opening through a retractable plane.

In such a third device, the rolls cut to the correct size are advanced by sliding on the plane in the closed configuration of the opening with consequent marking or external damage to the product, and consequently making its external final appearance not totally optimal, according to the requirements of the final consumer.

Moreover, in such a known device, while closing the plane has opposite motion to the sense of exit of the rolls, which proceed since they are carried forward by an upper suction belt. At the moment when the suction is deactivated, the roll falls on the plane, in some cases creating an overturning moment that makes the roll turn and lie on the cut side.

The purpose of the present invention is to make an improved device for eliminating the trims of rolls or logs of weblike material able to be positioned downstream of a sawing machine of at least one roll or log cut into rolls and head and/or back mini-rolls or trims that is able to solve the technical problems outlined earlier.

Yet another purpose of the present invention is to make an improved device for eliminating the trims of rolls or logs of weblike material that is extremely simple in its constructive structure and is equally easy to use.

Yet another purpose of the present invention is to make an improved device for eliminating the trims of rolls or logs of weblike material that can easily follow the high work rhythms of the sawing machine, even with a simple structure and with few synchronisations.

These purposes according to the present invention are accomplished by making an improved device for eliminating the trims of rolls or logs of weblike material, in particular associable with a sawing machine, as outlined in claim 1.

Further characteristics of the invention are highlighted by the subsequent claims.

The characteristics and advantages of an improved device for eliminating the trims of rolls or logs of weblike material according to the present invention will become clearer from the following description, given as a non-limiting example, referring to the attached schematic drawings, in which:
- figure 1 is a side elevation view of an improved device for eliminating trims of rolls or logs of weblike material, arranged downstream of a sawing machine, not shown, and made according to the present invention, in a first operating step;
- figure 2 is a side elevation view similar to that of figure 1 in a step immediately after the elimination of the head trim;
- figure 3 is a side elevation view similar to that of figure 1 in a step immediately after the elimination of the back trim;
- figure 4 is a side elevation view similar to that of figure 1 in a further operating step;

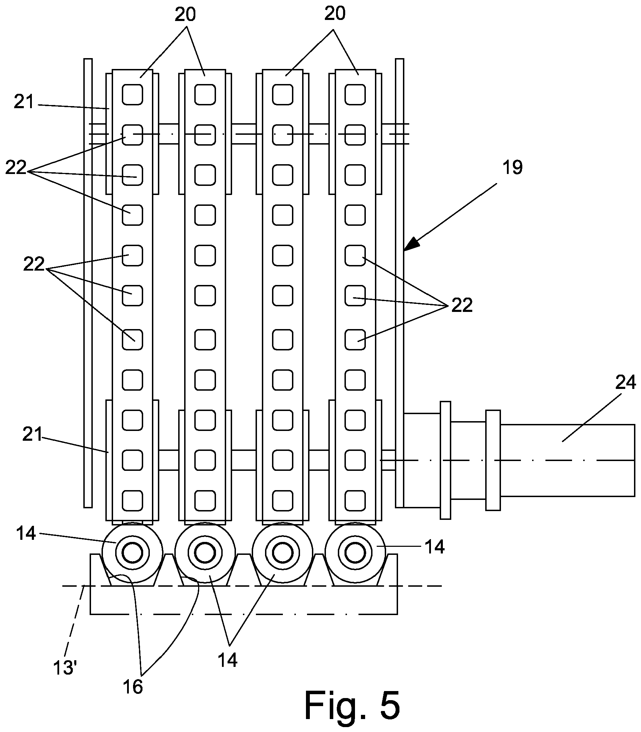

- figure 5 is a schematic vertical transversal view in an intermediate area of the device of figure 1, which shows four rows of parallel rolls exiting from the device according to the invention.

With reference to the figures, an improved device for eliminating the trims of elongated rolls, known as logs, of weblike material is shown, wholly indicated with 10, in particular of the type that can be positioned downstream of a sawing machine.

It is precisely in this area that a conveyor 11, for example provided with thrusters 12 or of another type, is positioned which determines a plurality of finished rolls 14 and of back 15 or head 15' mini-rolls or trims to advance on a feeding plane 13 along a feeding direction A, arranged on several parallel rows, in the example four rows, all coming out of a sawing machine (not shown).

In the example both the rolls 14 and the back 15 or head 15' mini-rolls or trims, cut, in a row one behind the other and arranged to slide within channels 16, are made to advance by the thrusters 12. The elevation views shown just the outer side row.

The feeding plane 13 faces a second feeding plane or an end part thereof, indicated with 13', arranged downstream of the first 13 with respect to the feeding direction A of the rolls 14 and of the back 15 or head 15' mini-rolls or trims.

In this second feeding plane or end part 13' of the first feeding plane 13 a second conveyor is provided, schematised at 11', which is for example made in the form of a conveyor belt. Such a conveyor 11' carries the rolls 14 forward, once a discharge opening 17 for the back 15 or head 15' mini-rolls or trims provided between the two parts of conveyor or between the two conveyors 11 and 11' has been passed.

The discharge opening 17 is of a size such as to allow the head 15' or back 15 mini-rolls or trims to pass through it, thus having dimensions at least equal to that of the diameter of a log.

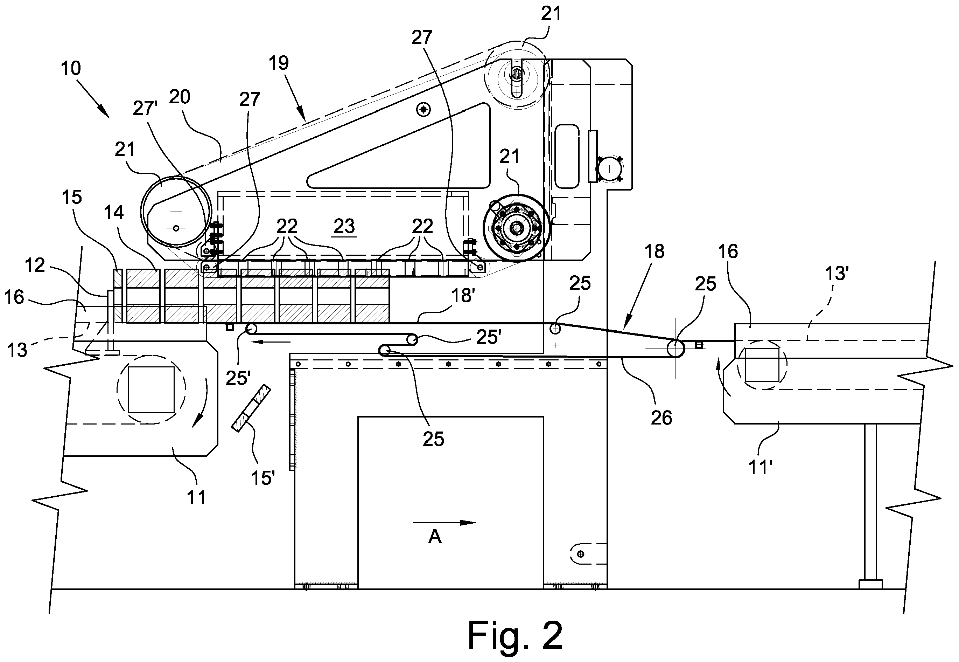

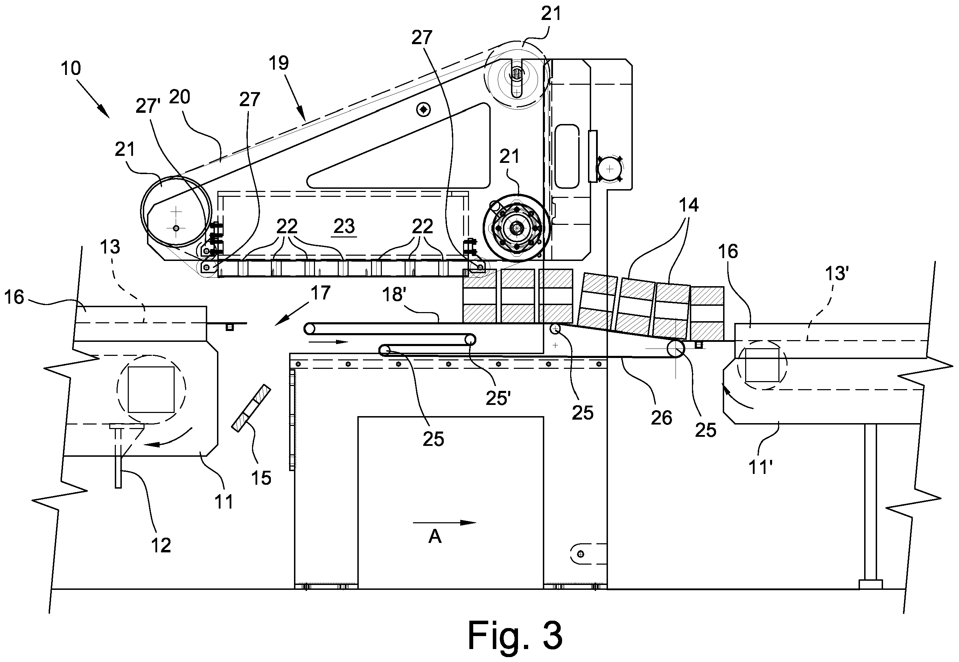

As shown by the sequence of figures 2 and 3, through the discharge opening 17 the thruster 12 must also be able to pass in rotation, mobile on a chain arranged closed in a loop under the feeding plane 13.

Moreover, according to the invention, the discharge opening 17 is closed again by an intermediate advancing device 18 of the extendable type.

The extendable intermediate advancing device 18 is for example made through a belt 26 in a closed loop relayed over a plurality of pulleys or rollers 25,25' of which at least one pulley or roller is motorised, that is connected to a motor that sets the belt 26 in rotation.

In the illustrated embodiment, the belt 26 in a closed loop is relayed over five pulleys or rollers 25, 25'.

The plurality of pulleys or rollers 25,25' is arranged so that the belt 26 in a closed loop defines an upper advancing plane 18' along the direction A, essentially horizontal and arranged substantially at the level of the first feeding plane 13 or second feeding plane 13'.

A pair 25' of pulleys or rollers of the plurality of pulleys or rollers 25, 25' is able to be translated horizontally in order to make the upper advancing plane 18' of the intermediate advancing device 18 extend, preferably in the direction opposite the feeding direction A of the rolls 14 and of the trims 15,15' and at the same time keep the tension of the belt 26 constant.

The extension of the intermediate advancing device 18 therefore takes place substantially at the level of the first feeding plane 13. Such extension takes place in response to a signal and/or according to a predetermined advancing pitch of the two conveyors 11,11'.

Above the area in which the opening 17 is provided there are gripping elements, wholly indicated with 19, which collect, for a certain limited time, the single roll 14 or groups of rolls 14, in any case until the intermediate advancing device 18 is in the configuration of maximum extension closing the discharge opening 17, accompanying them as they advance along the direction A for a certain distance that is also limited. Such gripping elements 19 intervene from above on some of the rolls 14 and are activated at least when the intermediate advancing device 18 is not in its configuration of maximum extension closing the discharge opening 17.

After this, indeed, the gripped rolls 14 are released above the intermediate advancing device 18, i.e. above the end part of the first feeding plane 13 or second feeding plane 13' to be conveyed toward packaging.

In the example shown, the gripping elements 19 consist of belts 20 wound in a loop around a plurality of second pulleys 21 and equipped with holes 22 that pass by a suction box 23. The suction box 23 is arranged precisely in an area arranged above the discharge opening 17. A pulley of the plurality of second pulleys 21 is motorised that is connected to a motor 24 that thus sets the belts 20 in rotation.

Preferably, the upper belts 20 each define a sucked plane bearing the holes 22 arranged at a height that can differ for the various rows of rolls that advance from the first feeding plane 13' towards the discharge opening 17. Each of the upper belts 20 has the sucked plane at a predetermined distance from the relative belt 26 forming the upper advancing plane 18' to define a passage area with a height slightly higher than the diameter of the rolls 14.

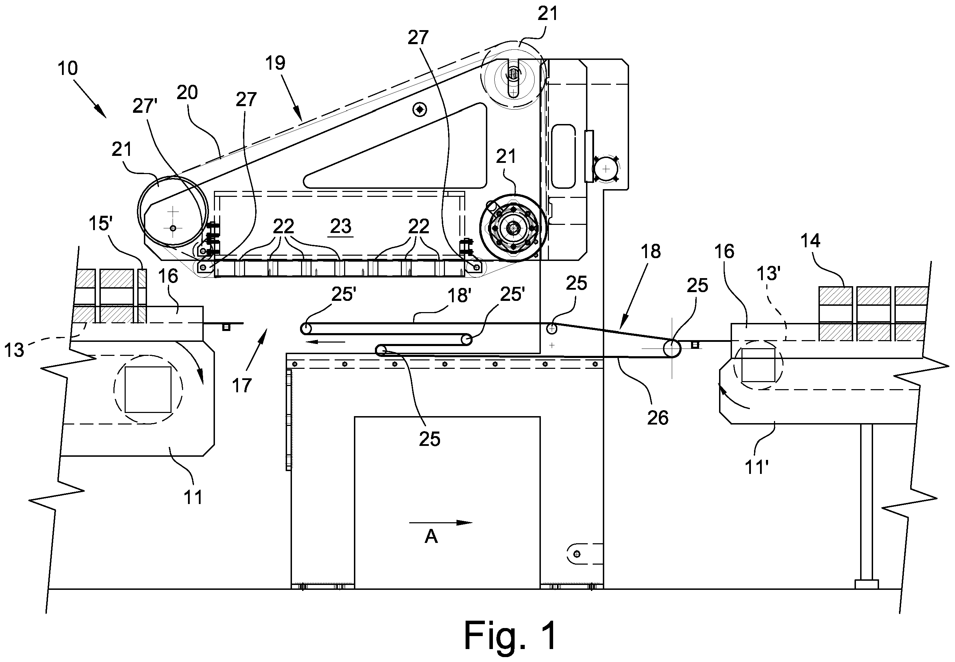

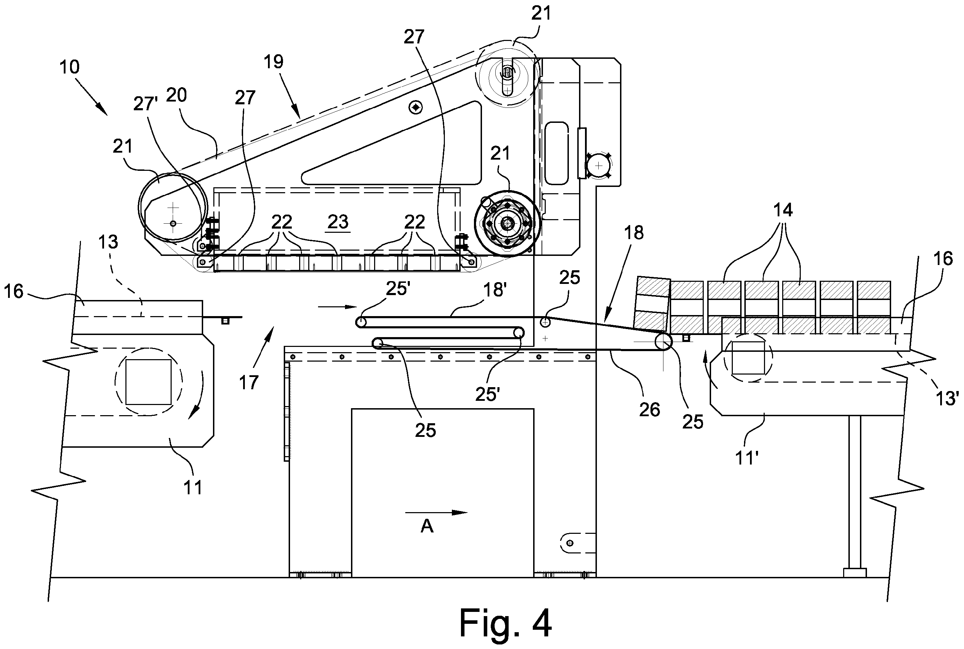

Figures 1-4 show, with a broken line, the belt 20 forming the sucked plane suitable for interacting with the rolls 14 shown being fed on the outer row. A solid line, on the other hand, shows the belt 20 forming the sucked plane suitable for interacting with the rolls 14 being fed on the next row, not shown, arranged at a lower height. In the detail in figure 2, such a sucked plane is schematically shown in a spatial position hidden by the rolls 14.

The return pulleys 27 and 27' allow the different positioning in height of the sucked planes defined by the belts 20. In particular, the pulleys 27 define the branch at a lower height (shown with a solid line) and the pulley 27' defines, with the motorised pulley 21, the branch at a higher height (shown with a broken line) .

Preferably, the gripping elements 19 have the same kinematic behaviour of the belt in a closed loop 26 of the intermediate advancing device 18.

The operation of a device according to the present invention can be immediately understood.

Indeed, the log or logs are made to move forward towards a sawing machine where they are cut in finished rolls 14.

This sawing or cutting operation, as stated, generates, besides the rolls 14, also back 15 or head 15' mini-rolls or trims. All these elements 14, 15, 15' are made to slide within the channels 16 under the action of the thrusters 12.

The trims or mini-rolls 15 and 15', as stated, need to be eliminated before packaging in the production line.

For this purpose, once the log or logs has been cut, the rolls 14 and the mini-rolls 15,15' advance towards the device 10 of the present invention, as shown in the figures, on a conveyor 11.

The one or more mini-rolls 15' advance in the various channels parallel to each other on several rows at the head of the logs 14 cut from the log or from the logs arranged in succession one after the other (figure 1) .

As the head mini-rolls 15' and rolls 14 cut to size approach the discharge opening 17, the intermediate advancing device 18 starts to extend, closing the opening 17 only once the head trim or mini-roll 15' made to advance has fallen into such a discharge opening 17.

At the same time, before the discharge opening 17 is completely closed by the intermediate advancing device 18 in extended configuration, the gripping elements 19 go into action, acting on the sole rolls cut to size 14 in order to prevent them from accidentally falling into the discharge opening 17.

In the example shown in figures 2 and 3, the belts 20 equipped with holes 22, passing by the suction box 23 that is activated, attract some rolls 14. The number of rolls 14 subject to gripping is limited and such as to allow the intermediate advancing device 18 to reach its configuration of maximum extension, closing the discharge opening 17.

Once the opening 17 is closed, the gripping means 19 are deactivated and the rolls 14 fall and advance thanks to the action of the intermediate advancing device 18, as well as thrusted by the thrusters 12 that also act on the back mini-rolls or trims 15.

Given that the accompanying motion of the upper gripping means 19 and of the intermediate advancing device 18 is advantageously concordant and preferably synchronous, the falling of the rolls 14 onto it 18 does not cause any overturning moment of the rolls 14.

As stated, according to a predetermined advancing pitch of the conveyor 11 or in response to a signal, the intermediate advancing device 18 shortens to free the discharge opening 17 in due time to allow the elimination of the back trim 15 (figure 3).

The back mini-rolls or trims 15 therefore fall into such an opening 17.

Also in this condition, the gripping elements 19 are in active condition in order to prevent just the rolls cut to size 14 from accidentally falling into the discharge opening 17.

The operating cycle of the device of the present invention is thus completed for a cut log that is for the rolls 14 and the head 15' and back 15 trims, that have been generated by the sawing machine.

Immediately afterwards, head trims or mini-rolls 15' of subsequent cut logs as well as rolls 14 advance and the operating cycle starts again (figure 1).

The opening 17 also receives these head trims or mini-rolls 15' and the gripping elements 19 go into action while the intermediate advancing device 18 is extending again to close the opening 17, and so on.

In this way, there is safe and simple removal of the back 15 or head 15' mini-rolls or trims, ensuring correct packaging.

This all applies, as stated many times above, even if the logs are in a greater number and there are many devices or a single multiple device for eliminating the trims 15, 15'.

Advantageously, the device according to the invention can receive, directly in outlet from the sawing machine, rolls arranged on rows staggered in height, in general four rows of which the inner rows are arranged at a lower height than the outer rows according to a preferred arrangement to carry out the cutting through a rotary sawing machine.

It has thus been seen that an improved device for eliminating the trims of rolls or logs of weblike material according to the present invention achieves the purposes highlighted earlier.

The improved device for eliminating the trims of rolls or logs of weblike material of the present invention thus conceived can undergo numerous modifications and variants, all of which are covered by the same inventive concept.

Moreover, in practice the materials used, as well as their dimensions and components, can be whatever according to the technical requirements.

## Claims

1. Device (10) for eliminating trims of rolls or logs of weblike material able to be positioned downstream of a sawing machine of at least one roll or log cut into rolls (14) and head (15') and/or back (15) mini-rolls or trims, made to advance in succession along a feeding direction (A) comprising a conveyor (11, 11') associated with a feeding plane (13, 13'), said feeding plane (13, 13') having a discharge opening (17) of dimensions such as to allow said head (15') and/or back (15) mini-rolls or trims to pass through it (17), said discharge opening (17) being able to be selectively closed in response to a signal and/or according to a predetermined pitch, there also being provided gripping elements from above (19) of at least part of said rolls (14) which can be activated at least when said discharge opening (17) is in the open configuration, wherein said gripping elements from above (19) comprise belts (20) wound in a loop around a plurality of second pulleys (21) and are equipped with holes (22) that pass by a suction box (23), said suction box (23) being arranged in an area arranged above said discharge opening (17), at least one of said plurality of second pulleys (21) being motorised, **characterised in that**, at said discharge opening (17), an intermediate advancing device (18) of the extendable type is provided for conveying said rolls (14) downstream of said discharge opening (17), said intermediate advancing device (18) closing said discharge opening (17) in the extended configuration, wherein said extendable intermediate advancing device (18) comprises a belt (26) in a closed loop relayed over a plurality of pulleys or rollers (25,25') at least one of which is motorised, said plurality of pulleys or rollers (25,25') being arranged so that said belt (26) in a closed loop defines a substantially horizontal upper advancing plane (18'), at least one pair (25') of pulleys or rollers of said plurality of pulleys or rollers (25,25') being able to translate in order to determine the extension of said upper advancing plane (18'), said gripping elements from above (19) and said belt (26) in a closed loop exerting a concordant and synchronous accompanying motion onto said at least part of said rolls (14).

2. Device (10) for eliminating trims of rolls or logs of weblike material according to claim 1, **characterised in that** said intermediate advancing device (18) is extendable in the direction opposite said feeding direction (A) of said rolls (14) and of said head (15') and/or back (15) mini-rolls or trims.

3. Device (10) for eliminating trims of rolls or logs of weblike material according to claim 1, **characterised in that**, in the extension step of said upper advancing plane (18'), said pulleys or rollers (25') which can be translated are mobile in the direction opposite said feeding direction (A).

4. Device according to claim 1, **characterised in that** said belts (20) each define a sucked plane bearing said holes (22) arranged at predetermined constant distance with respect to a corresponding upper advancing plane (18') of said intermediate advancing device (18), said distance being slightly higher than the diameter of said rolls (14).

5. Device according to claim 4, **characterised in that** said belts (20) of at least two adjacent rows have said sucked plane at different heights.

6. Device according to claim 5, **characterised in that** said belts (20) are also relayed around at least one return pulley (27, 27') to define the sucked plane.

7. Device (10) for eliminating trims of rolls or logs of weblike material according to any one of the previous claims, **characterised in that** said discharge opening (17) is arranged between a pair of conveyors (11, 11') arranged at respective feeding planes (13, 13').

8. Device (10) for eliminating trims of rolls or logs of weblike material according to any one of the previous claims, **characterised in that** at least one conveyor (11, 11') associated with a feeding plane (13, 13') is provided with thrusters (12) that slide within channels (16).

## Patentansprüche

1. Vorrichtung (10) zur Beseitigung von Abfall von Rollen aus bahnartigem Material, die in der Lage ist, einer Sägemaschine für wenigstens eine in Rollen (14) und kopfseitige (15') und/oder endseitige (15) Minirollen oder Trimmabschnitte geschnittene Rolle nachgeordnet ist, um hintereinander entlang einer Zufuhrrichtung (A) vorzurücken, umfassend einen Förderer (11, 11'), der mit einer Zufuhrebene (13, 13') verbunden ist, wobei die Zufuhrebene(13, 13') eine Ausstoßöffnung (17) mit angemessenen Abmessungen aufweist, um es den kopfseitigen (15') und/oder endseitigen (15) Minirollen oder Trimmabschnitten zu erlauben, sie (17) zu durchqueren; wobei die Ausstoßöffnung (17) in der Lage ist, als Reaktion auf ein Signal und/oder entsprechend einem vorgegebenen Abstand selektiv geschlossen zu werden, wobei ferner Greifelemente von oben (19) wenigstens eines Teils der Rollen (14) vorgesehen ist, die wenigstens dann aktiviert werden können, wenn die Ausstoßöffnung (17) sich in der geöffneten Stellung befindet, wobei die Greifelemente von oben (19) Riemen (20) umfassen, die in einer Schleife um eine Mehrzahl von zweiten Riemenscheiben (21) gewickelt und mit Löchern (22) versehen sind, die einen Saugkasten (23) passieren, wobei der Saugkasten (23) in einem Bereich angeordnet ist, der oberhalb der Ausstoßöffnung (17) angeordnet ist, wobei wenigstens eine der Mehrzahl von zweiten Riemenscheiben (21) motorisiert ist, **dadurch gekennzeichnet, dass** an der Ausstoßöffnung (17) eine Zwischenvorschubvorrichtung (18) vom verlängerbaren Typ vorgesehen ist, um die Rollen (14) stromabwärts der Ausstoßöffnung (17) zu fördern, wobei die Zwischenvorschubvorrichtung (18) die Ausstoßöffnung (17) in der verlängerten Konfiguration schließt, wobei die verlängerbare Zwischenvorschubvorrichtung (18) einen Riemen (26) in einer geschlossenen Schleife umfasst, der über eine Mehrzahl von Riemenscheiben oder Rollen (25,25') geführt ist, von denen wenigstens eine motorisiert ist, wobei die Mehrzahl von Riemenscheiben oder Rollen (25,25') so angeordnet ist, dass der Riemen (26) in einer geschlossenen Schleife eine im Wesentlichen horizontale obere Vorschubebene (18') definiert, wobei wenigstens ein Paar (25') von Riemenscheiben oder Rollen der Mehrzahl von Riemenscheiben oder Rollen (25, 25') zur Translation in der Lage ist, um die Verlängerung der oberen Vorschubebene (18') zu bestimmen, wobei die Greifelemente von oben (19) und der Riemen (26) in einer geschlossenen Schleife eine konkordante und synchrone Begleitbewegung auf wenigstens einen Teil der Rollen (14) ausüben.

2. Vorrichtung (10) zur Beseitigung von Abfall von Rollen aus bahnartigem Material, nach Anspruch 1, **dadurch gekennzeichnet, dass** die Zwischenvorschubvorrichtung (18) in die Richtung verlängerbar ist, die der Vorschubrichtung (A) der Rollen (14) und der kopfseitigen (15') und/oder endseitigen Minirollen oder Trimmabschnitte (15) entgegengesetzt ist.

3. Vorrichtung (10) zur Beseitigung von Abfall von Rollen aus bahnartigem Material, nach Anspruch 1, **dadurch gekennzeichnet, dass** in dem Verlängerungsschritt der oberen Vorschubebene (18') die Riemenscheiben oder Rollen (25'), die verschieblich sind, in die der Vorschubrichtung (A) entgegengesetzte Richtung beweglich sind.

4. Vorrichtung nach Anspruch 1, **dadurch gekennzeichnet, dass** die Riemen (20) jeweils eine Saugebene definieren, die die Löcher (22) trägt, die in einem vorgegebenen, gleichbleibenden Abstand in Bezug auf eine entsprechende obere Vorschubebene (18') der Zwischenvorschubvorrichtung (18) angeordnet sind, wobei der Abstand etwas größer als der Durchmesser der Rollen (14) ist.

5. Vorrichtung nach Anspruch 4, **dadurch gekennzeichnet, dass** die Riemen (20) von wenigstens zwei benachbarten Reihen die Saugebene auf unterschiedlichen Höhen aufweisen.

6. Vorrichtung nach Anspruch 5, **dadurch gekennzeichnet, dass** die Riemen (20) auch um wenigstens eine Umlenkscheibe (27, 27') gelegt sind, um die Saugebene zu definieren.

7. Vorrichtung (10) zur Beseitigung von Abfall von Rollen aus bahnartigem Material nach einem der vorstehenden Ansprüche, **dadurch gekennzeichnet, dass** die Ausstoßöffnung (17) zwischen einem Paar von Förderern (11, 11') angeordnet ist, die auf jeweiligen Zufuhrebenen (13, 13') angeordnet sind.

8. Vorrichtung (10) zur Beseitigung von Abfall von Rollen aus bahnartigem Material nach einem der vorstehenden Ansprüche, **dadurch gekennzeichnet, dass** wenigstens ein Förderer (11, 11'), der mit einer Zufuhrebene (13, 13') verbunden ist, mit Stoßern (12) versehen ist, die im Inneren von Kanälen (16) gleiten.

## Revendications

1. Dispositif (10) pour éliminer des chutes de rouleaux ou de rondins de matériau en bande apte à être positionné en aval d'une machine à scier d'au moins un rouleau ou rondin découpé en rouleaux (14) et en mini-rouleaux ou chutes de tête (15') et/ou de dos (15), amenés à avancer à la suite suivant une direction d'alimentation (A) comprenant un transporteur (11, 11') associé à un plan d'alimentation (13, 13'), ledit plan d'alimentation (13, 13') ayant une ouverture de décharge (17) de dimensions telles à permettre aux mini-rouleaux ou chutes de tête (15') et/ou de dos (15) de passer à travers celui-ci (17), ladite ouverture de décharge (17) étant apte à être sélectivement fermée en réponse à un signal et/ou selon un pas prédéterminé, il est également fourni des éléments de préhension à partir du dessus (19) d'au moins une partie desdits rouleaux (14) qui peuvent être activés au moins lorsque ladite ouverture de décharge (17) est dans la configuration ouverte, dans lequel lesdits éléments de préhension à partir du dessus (19) comprennent des courroies (20) enroulées en une boucle autour d'une pluralité de deuxièmes poulies (21) et sont équipés de trous (22) qui passent par une boîte d'aspiration (23), ladite boîte d'aspiration (23) étant agencée dans une zone agencée au-dessus de ladite ouverture de décharge (17), au moins une poulie parmi ladite pluralité de deuxièmes poulies (21) étant motorisée, **caractérisé en ce que**, au niveau de ladite ouverture de décharge (17), un dispositif d'avancement intermédiaire (18) du type extensible est fourni pour transporter lesdits rouleaux (14) en aval de ladite ouverture de décharge (17), ledit dispositif d'avancement intermédiaire (18) fermant ladite ouverture de décharge (17) dans la configuration étendue, dans lequel ledit dispositif d'avancement intermédiaire extensible (18) comprend une courroie (26) dans une boucle fermée relayée sur une pluralité de poulies ou de rouleaux (25, 25') dont au moins un(e) est motorisé(e), ladite pluralité de poulies ou de rouleaux (25, 25') étant agencée de sorte que ladite courroie (26) dans une boucle fermée définisse un plan d'avancement supérieur substantiellement horizontal (18'), au moins une paire (25') de poulies ou de rouleaux de ladite pluralité de poulies ou de rouleaux (25, 25') étant apte à translater afin de déterminer l'extension dudit plan d'avancement supérieur (18'), lesdits éléments de préhension à partir du dessus (19) et ladite courroie (26) dans une boucle fermée exerçant un mouvement d'accompagnement concordant et synchrone sur ladite au moins une partie desdits rouleaux (14).

2. Dispositif (10) pour éliminer des chutes de rouleaux ou de rondins de matériau en bande selon la revendication 1, **caractérisé en ce que** ledit dispositif d'avancement intermédiaire (18) est extensible dans la direction opposée à ladite direction d'alimentation (A) desdits rouleaux (14) et desdits mini-rouleaux ou chutes de tête (15') et/ou de dos (15).

3. Dispositif (10) pour éliminer des chutes de rouleaux ou de rondins de matériau en bande selon la revendication 1, **caractérisé en ce que**, dans l'étape d'extension dudit plan d'avancement supérieur (18'), lesdites poulies ou rouleaux (25') qui peuvent être translatés sont mobiles dans la direction opposée à ladite direction d'alimentation (A).

4. Dispositif selon la revendication 1, **caractérisé en ce que** lesdites courroies (20) définissent chacune un plan aspiré portant lesdits trous (22) agencés à une distance constante prédéterminée par rapport à un plan d'avancement supérieur correspondant (18') dudit dispositif d'avancement intermédiaire (18), ladite distance étant légèrement supérieure au diamètre desdits rouleaux (14).

5. Dispositif selon la revendication 4, **caractérisé en ce que** lesdites courroies (20) d'au moins deux rangées adjacentes ont ledit plan aspiré à des hauteurs différentes.

6. Dispositif selon la revendication 5, **caractérisé en ce que** lesdites courroies (20) sont également relayées autour d'au moins une poulie de rappel (27, 27') pour définir le plan aspiré.

7. Dispositif (10) pour éliminer des chutes de rouleaux ou de rondins de matériau en bande selon l'une quelconque des revendications précédentes, **caractérisé en ce que** ladite ouverture de décharge (17) est agencée entre une paire de transporteurs (11, 11') agencés au niveau de plans d'alimentation respectifs (13, 13').

8. Dispositif (10) pour éliminer des chutes de rouleaux ou de rondins de matériau en bande selon l'une quelconque des revendications précédentes, **caractérisé en ce qu'**au moins un transporteur (11, 11') associé à un plan d'alimentation (13, 13') est pourvu de propulseurs (12) qui coulissent à l'intérieur de canaux (16).
